Europäisches Patentamt

**European Patent Office**

**Office européen des brevets**

(11) Numéro de publication: **0 236 157 B1**

# FASCICULE DE BREVET EUROPEEN

(45) Date de publication de fascicule du brevet: **11.03.92** (51) Int. Cl.⁵: **H04N 5/335**, H04N 3/15

(21) Numéro de dépôt: **87400100.1**

(22) Date de dépôt: **16.01.87**

(54) **Système de lecture rapide d'un capteur optique matriciel à transfert de charges organisé en transfert de trame monocoup pour la détection vidéo d'images brèves.**

(30) Priorité: **24.01.86 FR 8601056**

(43) Date de publication de la demande:
**09.09.87 Bulletin 87/37**

(45) Mention de la délivrance du brevet:
**11.03.92 Bulletin 92/11**

(84) Etats contractants désignés:
**BE CH DE GB IT LI NL SE**

(56) Documents cités:

**SPIE, High speed photography and photonics, vol. 491, 1984, pages 693-701, Washington, US; C. CAVAILLER et al.: "Chaînes de lecture électronique d'images associées à des caméras à balayage de fente"**

**SPIE, High speed photography and photonics, vol. 491, 1984, pages 702-705, Washington, US; M.V. VYSOGORETS et al.: "Digital readout system for streak cameras on the basis of CCD and image intensifier"**

**SPIE, High speed photography and photonics, vol, 491, 1984, pages 716-722, Washington, US; G. BOUCHARLAT: "High-speed pickup of transient images"**

(73) Titulaire: **THOMSON-CSF**
**51, Esplanade du Général de Gaulle**
**F-92800 Puteaux(FR)**

(72) Inventeur: **Boue, Philippe**
**THOMSON-CSF SCPI 19, avenue de Messine**
**F-75008 Paris(FR)**
Inventeur: **Imhoff, Claude**
**THOMSON-CSF SCPI 19, avenue de Messine**
**F-75008 Paris(FR)**

(74) Mandataire: **Turlèque, Clotilde et al**
**THOMSON-CSF SCPI**
**F-92045 PARIS LA DEFENSE CEDEX 67(FR)**

Rank Xerox (UK) Business Services

## Description

La présente invention concerne un système de lecture rapide d'un capteur optique matriciel à transfert de charges organisé en transfert de trame monocoup pour la détection vidéo d'images brèves. L'utilisation de l'invention est plus particulièrement envisagée pour un système d'enregistrement multivoies de signaux optiques à l'aide d'une caméra à balayage de fente.

On connaît les matrices détectrices en circuit solide à transfert de charges utilisées pour le transfert de trame d'images de télévision. Par exemple, le capteur TH 7861 de THOMSON-CSF est organisé pour effectuer le transfert de trame au standard TV-CCIR, il comporte 576 lignes de 384 points. Cette structure matricielle connue comprend une zone photosensible et une zone mémoire, chacune de 288 lignes. Après intégration et exposition pendant une durée d'une trame, soit 20 millisecondes pour 25 images/s, l'information correspondante est transportée de la zone photosensible dans la zone mémoire où elle est relue à la cadence de télévision à travers un registre de lecture tandis que la deuxième trame décalée d'une ligne pour réaliser l'entrelacement est en intégration sur la zone photosensible. Un tel capteur permet de lire une image constituée de deux trames au cours d'une durée totale de 40 millisecondes selon le standard télévision.

Pour une analyse plus rapide d'image correspondant à des phénomènes beaucoup plus courts, la matrice photosensible est organisée différemment. C'est le cas du TH 7882 de THOMSON-CSF qui est dérivé du dispositif précité et qui est réalisé suivant la même technologie mais la zone mémoire est également photosensible. Cette configuration fournit une grande surface photosensible composée de 576 lignes de 384 points élémentaires ou pixels. Ce capteur ne peut être utilisé qu'en mode monocoup ; après intégration, il doit être placé dans l'obscurité et l'image peut être lue à une cadence quelconque, pourvue qu'elle soit compatible avec l'intégration du courant d'obscurité du photosenseur, et avec la bande passante de ses circuits internes et de son amplificateur de sortie. Cette solution représente cependant des limitations. Les temps d'intégration et de lecture sont limités par l'augmentation du courant d'obscurité dû aux effets thermiques. A 25°C, cette limitation est de l'ordre de 100 à 500 millisecondes. Un temps minimal de lecture de 25 millisecondes résulte de la fréquence maximale envisageable pour les signaux de commande de lecture encore appelés phases de lecture.

Une telle durée est encore trop longue pour l'analyse de phénomènes très brefs. On envisage pour l'invention des phénomènes qui peuvent être par exemple de l'ordre de une milliseconde et qui ne sont pas répétitifs.

Une solution consisterait à utiliser la matrice monocoup précitée sur une partie réduite de sa zone photosensible en réduisant donc le nombre de pixels de l'image suffisamment pour réduire la durée de lecture de l'image. Une telle solution est décrite dans l'article "lecture rapide d'images brèves. G. Boucharlat, Thomson, Congrès photographie rapide de Strasbourg, septembre 1984", qui prévoit de choisir une zone image dans le coin inférieur gauche de l'image (fig.2 de ce document antérieur). On se rend compte que cette solution n'est pas satisfaisante car la résolution de l'image est trop fortement dégradée.

La solution proposée selon l'invention permet d'obtenir des temps de lecture très brefs ainsi que la résolution optimale pour l'image correspondant à l'ensemble des points de la matrice.

Le but de l'invention est atteint en réalisant un système de lecture rapide d'un capteur optique matriciel à transfert de charges organisé en transfert de trame monocoup pour la détection vidéo d'images brèves, dans lequel l'information vidéo se trouve répartie selon plusieurs bandes parallèles comprenant chacune plusieurs lignes de pixels, la partie restante de la matrice détectrice formant des intervalles de séparation entre les bandes et étant dépourvue d'information vidéo utile, chaque intervalle entre deux bandes successives comprenant plusieurs lignes de pixels, lesdites bandes étant disposées parallèlement à un registre de lecture suivi d'un circuit de sortie vidéo, la lecture étant commandée par un générateur de signaux annexes. Les moyens de lecture sont déterminés pour effectuer alternativement, pour chaque bande d'information utile et pour chaque intervalle:

- le transfert en parallèle et l'accumulation dans le registre des charges des lignes composant la bande ou l'intervalle considéré ;
- la lecture série du contenu accumulé dans ledit registre et la remise zéro dudit registre, à la fin du transfert complet de ladite bande ou dudit intervalle ;

Les avantages résultant de la solution proposée sont dus essentiellement à l'intégration analogique et non numérique comme elle se pratiquait auparavant ce qui évite des erreurs, et à l'obtention d'un rapport signal/bruit accru et donc une sensibilité plus élevée du système.

L'invention est utilisée plus particulièrement pour réaliser un système d'enregistrement multivoies de signaux à l'aide d'une caméra à balayage de fente. Un tel système permet l'enregistrement de transitoires rapides sur un grand nombre d'échantillons.

L'avantage de la caméra à balayage de fente en tant qu'enregistreur de transitoires optiques provient de la transformation quasiinstantanée de la lumière en électrons au niveau de la photocathode et de la mémorisation du signal au niveau de l'écran, ce qui permet sa reprise par une caméra vidéo et sa numérisation en temps différé. Un autre avantage est que l'amplification du signal peut être effectuée avec une très grande bande passante.

Les particularités et avantages de l'invention et de son utilisation à un système d'enregistrement multivoie apparaîtront dans la description qui suit donnée à titre d'exemple à l'aide des figures annexées qui représentent :

- Fig.1, un bloc-diagramme d'un système d'enregistrement multivoie de signaux brefs à l'aide d'une caméra à balayage de fente et d'une caméra à DTC analysés en lecture rapide conformément à l'invention,
- Fig.2, un modèle d'image à pluralité de traces parallèles obtenue au niveau du capteur DTC du système selon la Fig.1 ;
- Fig.3A, 3B et 3C, un détail d'une trace avec des variations des charges selon l'axe spatial et selon l'axe temporel ;
- Fig.4, une représentation d'un exemple de distribution des bandes utiles dans la matrice DTC ;
- Fig.5, un schéma de rappel de l'organisation du capteur DTC pour le transfert de trame monocoup ;
- Fig.6, un chronogramme des principaux signaux de commande et du signal vidéo selon le procédé de lecture rapide mis en oeuvre ;
- Fig.7 et Fig.8, des diagrammes de systèmes de reprise d'image à lecture rapide d'un capteur DTC conformes à l'invention.

Pour faciliter la compréhension de l'invention on la considère dans le cadre de l'application envisagée à un système d'enregistrement multivoies de signaux optiques. Il va de soi que cette utilisation n'est pas limitative pour l'invention et que le système de lecture rapide proposé s'applique à tout ensemble dans lequel l'information vidéo est répartie selon des bandes parallèles dont la disposition sur la surface de la matrice DTC est connue à l'avance, chaque bande comportant une pluralité de lignes de balayage et étant séparée de la suivante par un intervalle sans information vidéo utile.

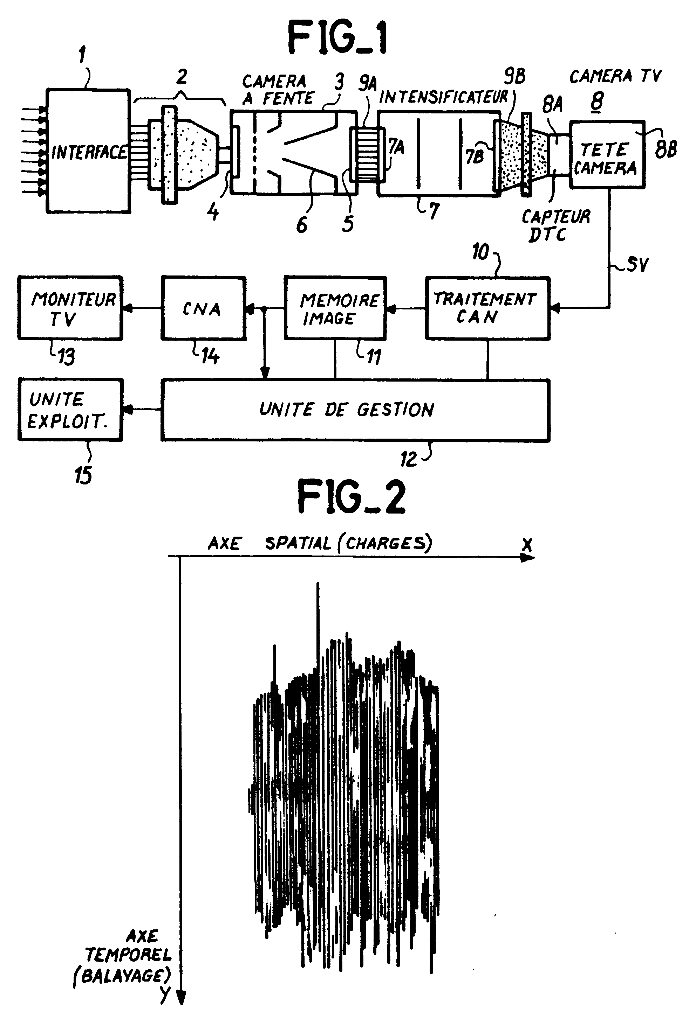

La figure 1 rappelle la structure générale d'un tel système d'enregistrement multivoie de signaux.La caméra à balayage de fente, dite "streak caméra"selon l'appellation anglo-saxonne, est utilisée pour l'enregistrement de signaux optiques multiples dont la résolution temporelle est inférieure à la centaine de picosecondes. Le phénomène à observer qu'il soit électrique ou optique, est appliqué à un circuit interface d'entrée 1 qui élabore des signaux optiques calibrés. Ces signaux optiques sont rassemblés par l'intermédiaire d'un adaptateur optique à fibres 2 selon une fente, située à l'entrée de la caméra à balayage de fente 3. L'adaptateur 2 rassemble le faisceau de fibres selon une fente lumineuse correspondant aux fibres juxtaposées linéairement. La caméra à balayage de fente 3 comporte à l'entrée une photocathode 4 et en sortie une anode avec un écran fluorescent 5, et entre les deux des grilles et des électrodes déflectrices 6. En considérant le nombre N de voies optiques correspondant chacune à une fibre on dispose à l'entrée de la caméra 3 de N voies optiques juxtaposées selon une ligne et qui, par le biais de la déflexion vont être ensuite déplacées orthogonalement à la direction de la fente lumineuse de manière à visualiser pour chacune de ces N voies la variation temporelle du phénomène correspondant. En sortie de la caméra à fente, le signal peut être appliqué à cet effet à une caméra de télévision 8 si le gain est suffisant. Généralement on dispose, entre la caméra à fente et la caméra de télévision, un tube intensificateur d'images 7 pour accroître l'intensité lumineuse du signal et rétablir un gain suffisant. L'écran fluorescent 5 de la caméra à fente est couplé optiquement à la photocathode d'entrée 7A du tube intensificateur, ce couplage étant généralement assumé par une galette de fibres optiques 9A. De même la sortie de l'intensificateur comporte un écran fluorescent qui est couplé par une galette de fibres, ou par un cône réducteur 9B, à la caméra de télévision 8. Celle-ci comporte un capteur photosensible 8A considéré en circuit solide à transfert de charges dit DTC. Le capteur est formé d'une matrice en XY d'éléments photosensibles qui constituent les points ou pixels de l'image et qui reçoivent le flux lumineux de l'image en sortie de l'intensificateur. Cette matrice est elle-même suivie de la tête de caméra 8B incluant un circuit de pré-amplification et de lecture pour produire un signal vidéo SV analogue à celui d'un balayage de type télévision.

Ce signal vidéo est transmis à des circuits de traitement et de conversion 10 dans lesquels il peut subir un certain nombre de corrections telles que la correction de non-uniformité de noir, l'élimination des éléments de la matrice présentant des défauts locaux, et la correction de non-uniformité de réponse des éléments de la matrice. Le signal est délivré sous forme numérique à une mémoire d'image 11 qui peut comporter plusieurs plans images pour stocker un certain nombre d'images successives.

L'ensemble des deux caméras 3 et 8, ainsi que les circuits de traitement 10 et la mémoire d'images 11 sont gérés par une unité de gestion 12. Les signaux d'images stockés peuvent être visualisés sur un moniteur 13 après conversion en analogique dans un convertisseur 14, sur commande de l'unité 12. Suivant un autre mode d'utilisation les signaux sont transmis à travers un coupleur entrée-sortie à une unité d'exploitation annexe 15 pouvant comporter un ordinateur ou des circuits d'enregistrement numérique divers.

Les variations temporelles rapides d'intensité des signaux lumineux appliqués à la caméra à balayage de fente 3 sont transformées au niveau de la matrice 8A en variations de charges suivant l'axe de balayage. Elles peuvent ensuite être enregistrées sur un film ou mesurées à l'aide d'un ensemble de reprise d'images et de numérisation.

La figure 2 reproduit un exemple de l'image obtenue dans ces conditions et constituée par une série de traces rectilignes. Chaque trace correspond à une voie optique et occupe un nombre de lignes données, par exemple trois lignes utiles suivant l'axe Y de balayage correspondant à l'axe temporel. Cette largeur de trace est fonction du diamètre de la fibre transmettant le signal optique de la voie et du coefficient de réduction de l'image introduit dans le système. Les traces sont séparées par un espace libre ou intervalle ne contenant aucune information vidéo utile. Cet intervalle occupe par exemple 24 lignes entre chaque trace ou bande utile. On peut considérer qu'il y a 20 voies optiques de mesure et que le capteur matriciel comporte 576 lignes de 384 points. L'information utile est constituée dans le sens transversal X appelé axe spatial, de la somme des trois pixels constituant la trace de la voie considérée. Dans le sens longitudinal correspondant à l'axe temporel Y de balayage et selon la résolution temporelle recherchée il est possible de sommer les charges de plusieurs pixels consécutifs pour avoir un échantillon.

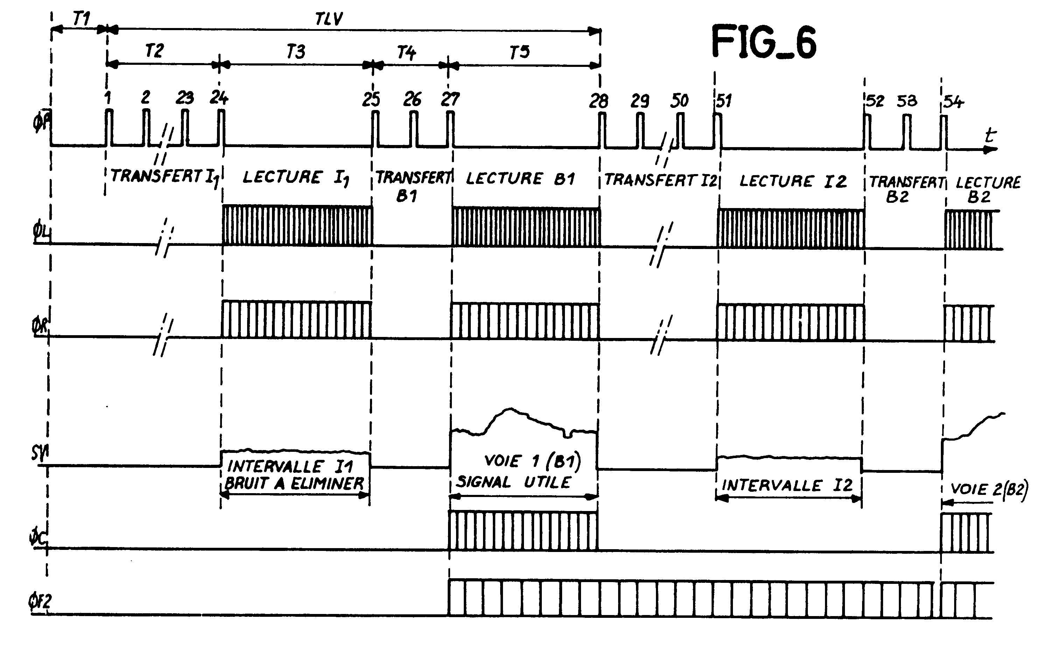

L'étage de sortie du registre de lecture RL est constitué avec une diode flottante (D1, Fig.5) qui assure la conversion charges-tension du signal correspondant à chaque pixel. Normalement avant l'arrivée de chaque paquet de charges, le potentiel de la diode de lecture est fixé à un niveau de référence par un transistor de précharge (E1). Si cette mise à niveau n'est pas effectuée pour un groupe par exemple de trois pixels consécutifs, les charges correspondantes sont sommées dans la diode flottante et la tension de sortie à l'issue de cette opération représente la somme des charges accumulées dans ces pixels. Il va de soi que la résolution la plus grande mais le temps de lecture le plus long résultera du nombre d'échantillons égal au nombre de pixels selon le sens Y du balayage. On considérera que la matrice qui comporte 384 points élémentaires dont ce sens peut pourvoir 300 points utiles. Si l'on choisit par exemple de sommer 2 pixels dans ce sens longitudinal, un échantillon utile sera représenté par la somme de 6 pixels correspondant aux 2 pixels longitudinaux et aux 3 pixels transversaux. Le nombre total d'échantillons utiles est égal au nombre d'échantillons par voie multiplié par le nombre de voies, soit dans ce cas, $(300/2) \times 20 = 3000$. Ce chiffre est à rapprocher du nombre total de pixels du capteur qui est de $576 \times 300$ soit 172800. Le rapport de ces deux résultats montre que le nombre d'échantillons utiles occupe le 1/58ème de la surface utile totale du capteur.

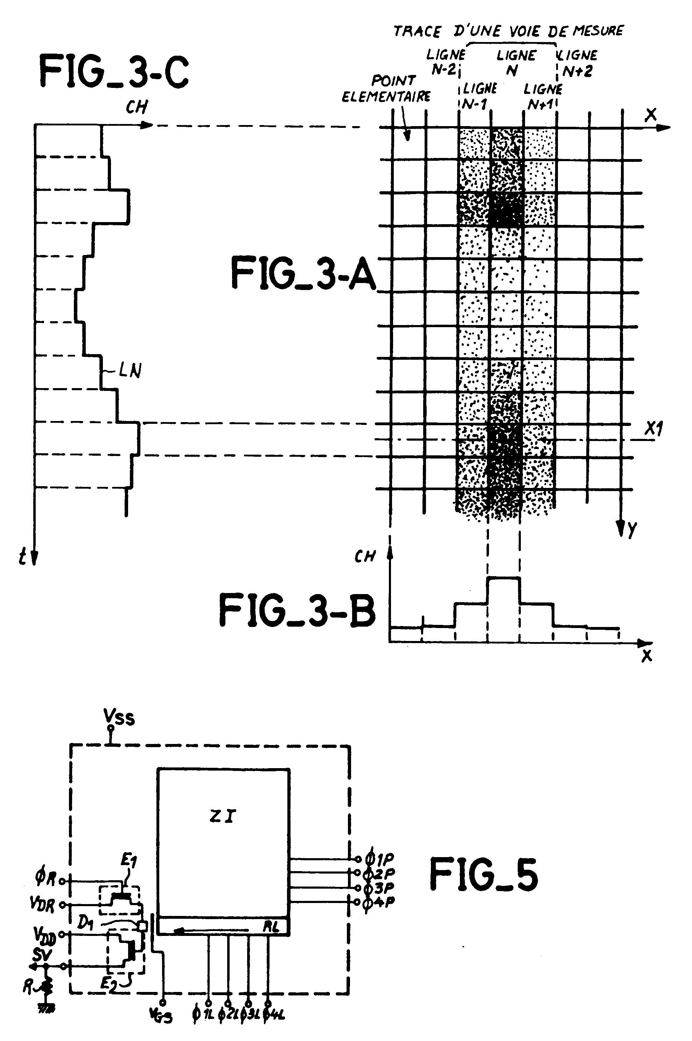

La figure 3A représente plus en détail une portion d'une trace et montre, en fonction de la variation temporelle du signal, les variations de densité de la charge sur les trois lignes de balayage au cours du temps. Cette variation de charge est représentée sur les lignes utiles d'ordre N, N-1 et N + 1 correspondant à la trace considérée.

La figure 3B montre la répartition de la charge suivant par exemple la direction $X_1$ parallèle à l'axe spatial X. Les charges audelà des trois lignes utiles de balayage considérées sont constitués par des signaux de bruit et pour les lignes utiles par l'ensemble bruit et signal utile.

La figure 3C montre la variation temporelle de la trace suivant par exemple la ligne N.

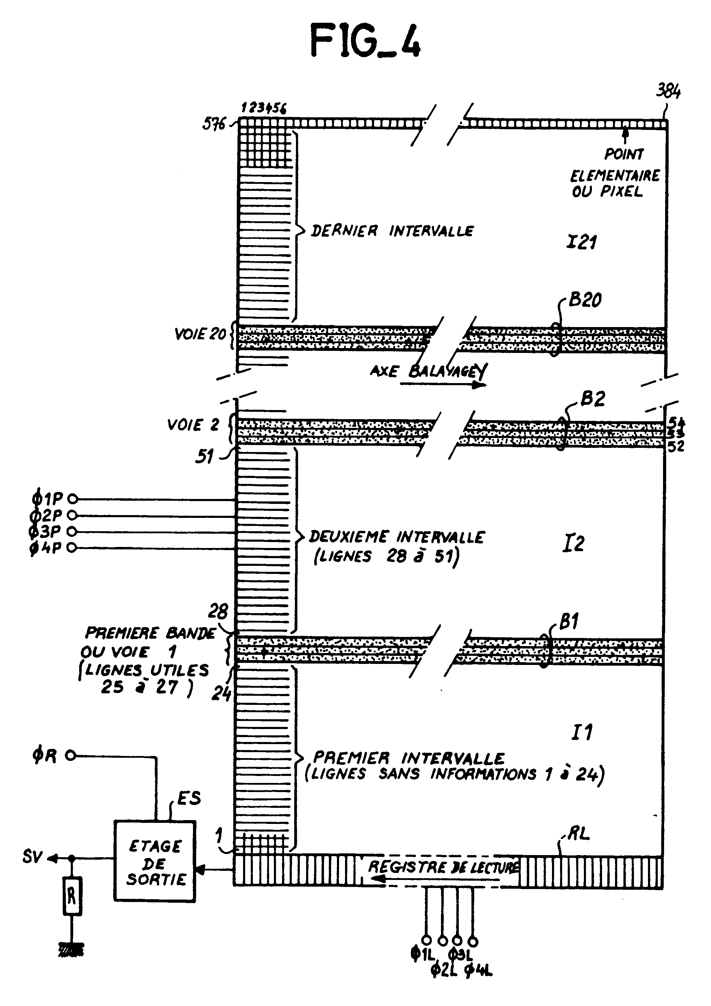

La figure 4 montre la répartition des bandes utiles $B_1, B_2,... B_{20}$ sur la surface photosensible de la matrice avec la séparation d'intervalles $I_1$, $I_2,....I_{21}$ correspondant à des zones sans information utile entre ces bandes. A la partie inférieure on distingue le registre de lecture RL suivi de l'étage de sortie ES avec une entrée de commande Ø R pour la remise à niveau de cet étage , la sortie signal vidéo SV et les entrées des phases de commande Ø 1L, Ø 2L, Ø 3L, Ø 4L de lecture du registre. Les phases de commande Ø 1P, Ø 2P, Ø 3P, Ø 4P correspondent aux signaux de transfert ligne de la zone image dans le registre.

La figure 5 rappelle la structure du capteur matriciel à DTC du type TH 7882 considéré pour assurer un fonctionnement monocoup avec une zone image ZI, le registre RL et le circuit de sortie composé d'une diode D1, d'un étage de remise à niveau E1 et d'un étage amplificateur de sortie E2.

Le chronogramme de fonctionnement du capteur DTC est représenté sur la figure 6. On rappelle le fonctionnement conventionnel de ce capteur. Dans la zone image les photons incidents traversent la structure isolant-grille avant d'être absorbés dans le substrat en créant des paires électrons-trous. Les trous sont recombinés dans le substrat tandis que les photo-électrons se rassemblent dans les puits de potentiel, créés par des capacités MOS que constituent les grilles polarisées par les phases de commande Ø P. La quantité de charges accumulées est proportionnelle à l'éclairement reçu et au temps d'intégration. Après la période d'intégration, la zone image ne doit pas recevoir d'éclairement pendant la période de lecture, pour éviter une dégradation du signal par la lumière parasite. Les 576 lignes du capteur sont transférées en parallèle, ligne par ligne, vers le registre de sortie RL. Des transferts supplémentaires de la zone image ZI vers le registre de lecture RL fournissent une référence d'obscurité de la trame.

Les charges correspondant à une ligne d'information vidéo sont donc transférées en parallèle dans le registre de lecture par les phases Ø P ; elles sont ensuite transférées séquentiellement point par point par le registre vers un circuit de sortie unique. Le registre comporte 405 étages ; le nombre de périodes de phase de transfert Ø L est donc au minimum de 405. En sortie du registre est disposé le circuit constitué par une diode flottante D1 qui assure la conversion charges-tension du signal correspondant à chaque point éléméntaire. Avant l'arrivée de chacun des paquets de charges, le potentiel de la diode de lecture est fixé à un niveau de référence par un transistor MOS de précharge E1. Le potentiel de la diode de lecture est appliqué ensuite à l'entrée d'un amplificateur E2 fournissant le signal vidéo SV sous faible impédance. La charge de l'amplificateur E2 est constituée par une résistance R. On a vu que ce fonctionnement conventionnel du capteur DTC exige un temps minimum de lecture de 25 millisecondes pour la fréquence maximale envisageable des phases de lecture. Les informations délivrées par les 405 étages du registre comportent des points de pré-lecture, des points pour absorber les effets de bord, les 384 points image qui peuvent contenir l'information vidéo utile de la ligne et des points de post-lecture. Les points ne contenant pas d'information vidéo sont tous lus pendant la suppression ligne. Le temps global de lecture pour l'obtention des informations utiles se trouve accru par la lecture des zones sans information utile. On a vu précédemment, pour l'exemple envisagé que le rapport entre le nombre total de pixels du capteur et le nombre de pixels comportant l'information utile pour un enregistrement multivoies pouvait être égal à 58.

Le principe de lecture rapide proposé selon l'invention consiste à éliminer pratiquement la durée de lecture des zones inutiles sans information vidéo correspondant aux intervalles entre les traces, et à effectuer les sommations des charges accumulées dans les zones utiles constituées par les bandes dont la disposition dans la zone image Z1 est connue.

En se reportant à la figure 4 et au chronogramme figure 6, la situation est la suivante à la fin de l'intégration de durée T1 de l'image. On a tout d'abord un premier intervalle T2 constitué par les lignes 1 à 24 du premier intervalle I1 qui ne contient pas d'information utile. La trace de la première voie ou bande B1 occupe les trois lignes suivantes 25, 26 et 27. Les lignes 28 à 51 suivantes représentent le second intervalle I2 qui ne contient pas d'information utile. Vient ensuite la deuxième bande B2, ou trace de la voie 2 à analyser, qui occupe les trois lignes 52, 53 et 54, et ainsi de suite pour les autres intervalles et les autres bandes B3 à B20.

Conformément à l'invention on élimine les zones inutiles ou intervalles dépourvus d'information vidéo. Cette élimination revient à réduire au maximum la durée de lecture des lignes correspondant aux intervalles. Pour expliquer le processus correspondant, on se réfère au premier intervalle I1, lignes 1 à 24 situé au-dessus du registre RL (Fig.4). Les signaux de phase Ø P de 1 à 24 font transférer successivement et rapidement les lignes 1 à 24 dans le registre de lecture. On produit ces transferts successifs sans lire à chaque fois la ligne correspondante ce qui élimine les durées de lecture de ces lignes par le registre RL où la lecture s'effectue en série. Le registre de lecture RL intègre donc toutes les charges résiduelles de bruit issues des lignes 1 à 24 et qui correspondent au niveau du noir augmenté par les fluctuations de bruit. Il est nécessaire d'évacuer les signaux intégrés correspondant dans le registre afin de préparer celui-ci à recevoir les données suivantes correspondant aux lignes utiles de la première bande B1. A cet effet, les signaux de commande Ø L (il y a autant de signaux Ø L que d'étages dans le registre), chassent vers la diode de lecture les charges accumulées dans les étages successifs du registre. A la même cadence, ou à une cadence moitié par exemple comme représenté, le signal de remise à niveau Ø R est appliqué à l'étage de sortie pour évacuer les signaux de bruit résultants et remettre à zéro le registre. La non prise en compte de ce bruit est avantageusement commandée à partir de l'unité de gestion 15 pendant la durée T3 de lecture du premier intervalle I1, puis celle de lecture de I2, etc.... A la fin de cette période T3 de lecture du premier intervalle on se trouve dans la situation suivante : le registre de lecture RL est vidé et les charges utiles de la première bande B1 qui se trouvaient dans les lignes 25 à 27 se trouvent maintenant transférées respectivement dans les lignes 1 à 3 prêtes à être transférées dans le registre.

Pour effectuer cette phase suivante de durée T4, on opère encore avec un gain de temps en évitant d'effectuer un transfert suivi d'une lecture ligne par ligne. Le processus utilisé consiste ici également à transférer successivement les trois lignes de la bande considérée dans le registre RL où les charges utiles se trouvent donc intégrées pixel par pixel et forment des signaux analogiques. Les signaux de phase Ø P numéros 25, 26 et 27 font transférer cette première bande dans le registre. Chaque cellule du registre de sortie reçoit ainsi la somme des charges de trois pixels, correspondant aux pixels de même rang sur les trois lignes occupées par la trace. Vient ensuite la période T5 de lecture proprement dite de ces trois lignes et ici encore les signaux Ø L font déplacer les charges vers l'étage de sortie. Tous les n Ø L (on peut prendre n = 2, comme dans le cas précédent si l'on désire intégrer les pixels stockés dans le registre n par n), le signal Ø R de remise à niveau est appliqué. Chaque échantillon ainsi émis en sortie représente donc 3n pixels (n colonnes × 3 lignes). Pour une résolution maximale n = 1 et chaque échantillon représente trois pixels. Une intégration analogique du signal de la voie 1 a ainsi été réalisée par le capteur DTC. L'information résultante est bien la représentation, à la précision des transferts près, de l'intensité lumineuse reçue par le capteur.

On trouve ensuite le deuxième intervalle I2 qui était situé initialement entre les lignes 28 à 51 et qui se trouvent maintenant transférées entre les lignes 1 à 24 prêtes à être transférées et lues par le registre de lecture RL. La procédure est la même que pour celle décrite pour le premier intervalle. Il en est de même ensuite pour la deuxième voie qui constituait une bande B2 regroupant les lignes 52, 53 et 54 et qui vont se trouver à la fin de la lecture du deuxième intervalle transférées dans les lignes 1, 2 et 3 prêtes à être lues, et ainsi de suite pour les autres intervalles à éliminer et pour les autres bandes correspondant aux voies 3 à 20 restant à analyser.

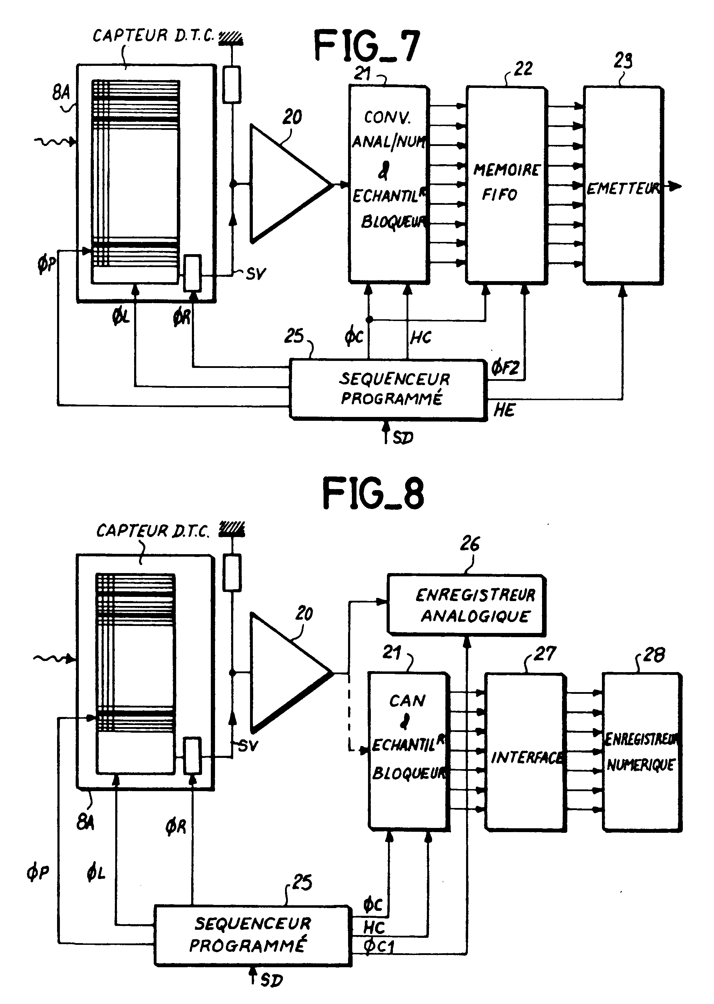

La figure 7 représente le bloc diagramme d'un système de reprise d'images à lecture rapide d'un capteur DTC selon la technique qui vient d'être décrite, et montre des circuits qui peuvent être associés au capteur. Après l'étage de sortie ES, un amplificateur vidéo 20 est alimenté par le signal vidéo utile et fournit ce signal amplifié à un convertisseur analogique-numérique avec échantillonneur-bloqueur 21. Vient ensuite un registre FIFO 22 qui reçoit en parallèle les données du convertisseur, puis un circuit d'émission 23 qui effectue la mise en série des informations numériques avec, éventuellement, une conversion sous forme optique en vue d'une transmission par fibre.

Le séquenceur programmable 25 peut être réalisé à l'aide d'une horloge de base et de générateurs de trains d'impulsions correspondant aux signaux Ø P, Ø L, Ø C et Ø F2 représentés sur la figure 6. Ces générateurs peuvent être réalisés soit en logique classique (TTL, CMOS....) par exemple sous forme de compteurs associés à des décodeurs programmables, soit à l'aide de circuits programmés de type PAL (logique séquentielle), soit à l'aide de circuits complexes microprogrammés (séquenceurs rapides.....) ou soit à l'aide d'un ensemble comprenant un microprocesseur de gestion, une mémoire de séquences (modules mémoire PROM, EEPROM ou CMOS soutenus) et de certains circuits précédents pour la génération de parties de séquences rapides. Cette dernière configuration offre le plus de souplesse de fonctionnement, en permettant de programmer suivant l'application : le nombre de voies optiques de mesures et le nombre de lignes qu'elles occupent ; leur position sur la matrice ; le facteur d'intégration suivant une ligne ; la durée du temps d'exposition du capteur matriciel ; la cadence de lecture de ce capteur ; la cadence de sortie de la mémoire FIFO. Le séquenceur 25 peut recevoir un signal de déclenchement SD de l'extérieur.

Dans le circuit convertisseur 21, l'échantillonneur-bloqueur permet de maintenir le signal analogique pendant le temps nécessaire à la conversion. Après conversion les informations numériques sont stockées dans le registre FIFO 22 puis lues à une cadence plus lente par le signal Ø F2. La mémoire FIFO permet de réduire la cadence de transmission d'un facteur sensiblement égal à 2 par rapport à la fréquence de conversion par utilisation complète du temps séparant deux trains de conversion. La transmission qui suit peut être effectuée par voie série ou parallèle sur un support filaire, optique ou hertzien.

Le bloc diagramme de la figure 7 peut être modifié comme représenté sur la figure 8 où le signal vidéo en sortie d'amplificateur peut être appliqué directement à un circuit de stockage 26 qui peut être un enregistreur analogique (magnétique, optique ou à semiconducteurs). L'organe de stockage peut aussi être un stockage sous forme numérique suivant la deuxième version figurée où le signal est d'abord converti dans le circuit convertisseur analogique-numérique 21 et transmis à travers un interface 27 à un enregistreur numérique 28 (magnétique, optique ou à semi-conducteurs).

Les avantages et performances de la technique mise en oeuvre sont considérées dans un exemple d'application à la lecture rapide d'un capteur TH 7882 à une vitesse d'horloge de 10 MHz (300 pixels par ligne) avec un nombre N d'échantillons par voie égal à 150 (un échantillon pour deux pixels sur 300 utiles). Pour lire toutes les informations du capteur dans les conditions d'exploitation conventionnelles il faudrait un temps égal à 28 millisecondes. Avec la technique proposée le temps nécessaire à la lecture des informations utiles se trouve réduit à 1,25 millisecondes, soit 23 fois moins.

Il a été montré qu'un échantillon utile représente de 3n pixels (dans le cas envisagé n = 2). Cette sommation s'effectue au niveau du capteur, alors que le procédé habituel consiste à effectuer une sommation après conversion des informations en numérique, ce qui présente l'inconvénient de sommer les erreurs dues au codage et celles liées au facteur de bruit de l'étage de sortie du capteur. La technique utilisée, en effectuant une intégration analogique est bien supérieure en ce qui concerne la précision de la mesure.

Les seules informations codées et transmises sont les informations utiles, il en résulte une compression des informations. On a vu déjà que le rapport entre le nombre d'informations utiles et le nombre de pixels du capteur étaient, pour l'exemple envisagé, égal à 1/58.

La vitesse de codage peut être réduite de moitié et le gain en débit d'informations peut être divisé par 4 pour l'exemple envisagé par rapport à une lecture conventionnelle.

L'élimination des zones inutiles n'altère pas la résolution des informations utiles. Il n'en serait pas de même si l'image se trouvait concentrée sur une surface plus restreinte du capteur.

Les sommations ou intégrations effectuées dans le capteur permettent, pour un éclairement d'entrée considéré constant, d'obtenir un signal de sortie plus élevé. Pour l'exemple envisagé, la sensibilité peut être considérée multipliée par un facteur 6, les sommations étant faites pour 6 pixels (2 pixels sur 3 lignes).

Le plus petit échantillon correspond à un pixel de la matrice et donne la résolution maximale L lignes de P points mais la cadence de lecture d'image est la plus lente. De manière généralisée, si l'échantillon choisi comporte r pixels longitudinaux (Y) et n pixels transversaux (X) soit r.n pixels, la résolution diminue, elle devient $\frac{L}{n} \times \frac{P}{r}$, par contre la cadence image augmente, elle est multipliée par r.

**Revendications**

1. Système de lecture rapide d'un capteur optique matriciel à transfert de charges (8A) organisé en transfert de trame monocoup pour la détection vidéo d'images brèves, caractérisé en ce que dans le capteur optique matriciel (8A) , l'information vidéo se trouve répartie selon plusieurs bandes parallèles (B1, B2,...) comprenant chacune plusieurs lignes de pixels, la partie restante de la matrice détectrice formant des intervalles (I1, I2,...) de séparation entre les bandes (B1, B2,...) et étant dépourvue d'information vidéo utile, chaque intervalle (I1, I2,...) entre deux bandes successives comprenant plusieurs lignes de pixels, lesdites bandes (B1, B2,...) étant disposées parallèlement à un registre de lecture (RL) suivi d'un circuit de sortie vidéo, la lecture étant commandée par un générateur de signaux annexes, et en ce que les moyens de lecture sont déterminés pour effectuer alternativement, pour chaque bande d'information utile (B1, B2,...) et pour chaque intervalle (I1, I2,...) :
- le transfert en parallèle et l'accumulation dans le registre (RL) des charges des lignes composant la bande ou l'intervalle considéré ;
- la lecture série du contenu accumulé dans ledit registre (RL) et la remise à zéro dudit registre (RL), à la fin du transfert complet de ladite bande ou dudit intervalle.

2. Système selon la revendication 1, caractérisé en ce que les moyens de lecture sont adaptés pour mettre en oeuvre la lecture du capteur à transfert de charge (8A) selon les étapes suivantes :
- une première période (T2) de transfert successif en parallèle et d'accumulation des lignes (1 à 24) sans information utile composant le premier intervalle (I1) dans le registre de lecture (RL) et d'accumulation pixel à pixel des signaux de bruits présents,
- une deuxième période (T3) de lecture en série du registre (RL) et d'élimination desdits signaux de bruits détectés, à la fin du transfert dudit premier intervalle (I1) dans le registre (RL),
- une troisième période (T4) de transfert successif en parallèle des lignes (25 à 27) utiles composant la première bande (B1) dans le registre de lecture (RL) et de sommation pixel par pixel des signaux vidéo utiles présents,
- une quatrième période (T5) de lecture en série du registre (RL) et d'obtention sous forme analogique desdits signaux vidéo sommés (SV) relatifs à la première bande.
- et ainsi de suite pour les autres intervalles inutiles et les autres bandes utiles formant le reste de l'image à analyser.

3. Système selon la revendication 1 ou 2, caractérisé en ce que la sortie vidéo (SV) est appliquée après amplification (20) à un convertisseur analogique-numérique (21) avec échantillonneur-bloqueur permettant de maintenir lesdits signaux vidéo analogiques pendant le temps nécessaire à la conversion.

4. Système selon la revendication 3, caractérisé en ce que ledit convertisseur (21) alimente en parallèle une mémoire à registre FIFO (22) suivie d'un circuit émetteur (23) qui effectue la mise en série des informations numériques issues de ladite mémoire (22) en vue d'une transmission, et en ce que ledit générateur de signaux de commande est un séquenceur programmable (25) élaborant les signaux de commande dudit capteur (8A), dudit convertisseur (21), de ladite mémoire (22) et dudit émetteur (23).

5. Système selon la revendication 3, caractérisé en ce que ledit convertisseur (21) alimente en parallèle à travers un circuit d'interface (27), un dispositif enregistreur numérique (28), et en ce que ledit générateur de signaux de commande est un séquenceur programmable (25) élaborant les signaux de commande dudit capteur (8A) et dudit convertisseur (21).

6. Système selon la revendication 5, caractérisé en ce que le séquenceur programmable (25) permet de sélectionner le nombre de voies de mesures, le nombre de lignes du capteur (8A) que chaque voie occupe, leur position sur le capteur, le facteur d'intégration suivant une ligne, la durée du temps d'exposition du capteur, la cadence de lecture de ce capteur ainsi que la cadence de sortie de la mémoire FIFO (22) de ralentissement, ledit séquenceur programmable étant principalement composé d'un organe de gestion à base de microprocesseur et de mémoire de séquences associé à des circuits logiques microprogrammables ou non.

7. Système selon la revendication 1 ou 2, caractérisé en ce que la sortie vidéo (SV) est appliquée directement après amplification (20) à un dispositif enregistreur analogique (26), et que le générateur de signaux de commande est un séquenceur programmable (25) qui élabore les signaux de commande du capteur (8A) et du dispositif enregistreur (26).

8. Système selon l'une quelconque des revendications 1 à 3 utilisé dans un système d'enregistrement multivoie de signaux optiques à l'aide d'une caméra à fente (3).

**Claims**

1. A high-speed reading system for an optical matrix sensor (8a) of the charge transfer type organized for single stroke raster transfer for the detection of short-duration video images, characterized by the distribution within the optical matrix sensor (8A) of the video information in a plurality of parallel bands (B1, B2,...) each comprising a plurality of pixel lines, the remaining part of the detecting matrix constituting separation intervals (I1, I2,...) between the bands (B1 B2,...) and being deprived of utilizable video information, each interval (I1, I2,...) between two successive bands comprising a plurality of lines of pixels, the said bands (B1, B2,...) being arranged parallel to a read register (RL) followed by an output video circuit, reading being controlled by a generator of annexed signals and in that the reading means are predetermined in order to alternatively effect, for each band of utilizable information (B1, B2,...) and for each interval I1, I2,...):
   - transfer in parallel, and accumulation in the register (RL), of line charges constituting the band or the interval considered and;
   - serial reading of the content accumulated in the said register (RL) and the resetting to zero of the said register (RL) at the end of the complete transfer of the said band or of the said interval.

2. The system as claimed in claim 1, characterized in that the read means are adapted to effect reading of the charge transfer sensor (8A) in the following steps:
   - a first period (T2) for successive transfer in parallel and for accumulation of lines (1 through 24) without utilizable information constituting the first interval (I1) in the read register (RL) and for pixel-wise accumulation of the noise signals present,
   - a second period (T3) for the serial reading of the register (RL) and for the elimination of the said detected noise signals, at the end of the transfer of the first interval (I1) into the register (RL),
   - a third period (T4) for the successive parallel transfer of the utilizable lines (25 through 27) constituting the first band (B1) into the read register (RL) and for the pixel-wise summation of the utilizable video signals present,
   - a fourth period (T5) for the serial reading of the register (RL) and the production in an analog form of the said summated video signals (SV) relating to the first band,
   - and so on for the other non-utilizable intervals and the other utilizable bands constituting the remainder of the image to be analyzed.

3. The system as claimed in claim 1 or in claim 2, characterized in that the video output (SV) is applied after amplification (20) to an analog-digital converter (21) with a sample and hold device rendering it parallel to maintain the said analog video signals during the time necessary for the conversion.

4. The system as claimed in claim 3 characterized in that the said converter (21) supplies a register memory FIFO (22) in parallel, said register being followed by an emitter circuit (23) which causes the serial placement of the digital information from the said memory (22) for the purpose of a transmission, and in that the said control signal generator is a programmable sequencer (25) processing the control signals of the said sensor (8A), of the said converter (21), of the said memory (22) and of the said emitter (23).

5. The system as claimed in claim 3 characterized in that the said converter (21) supplies a digital recording device (28) in parallel and via an interface circuit (27) and in that the said control signal generator is a programmable sequencer (25) processing the control signals of the said sensor (8A) and of the said converter (21)

6. The system as claimed in claim 5 characterized in that the said programmable sequencer (25) renders it possible to select the number of measurement paths, the number of lines of the sensor (8A) that is occupied by each path, the position thereof on the sensor, the integration factor on a line, the duration of time of exposure of the sensor, the read rate of the such sensor as well as the output rate of the delay memory FIFO (22), the said programmable sequencer being principally constituted by a microprocessor-based organizer and a sequence memory associated with microprogrammable or non-microprogrammable logic circuits.

7. The system as claimed in claim 1 or claim 2, characterized in that the video output (SV) is applied directly after amplification (20) to an analog recording device (26) and in that the control signal generator is a programmable sequencer (25) which processes the control signals of the sensor (8A) and of the recording device (26).

8. The system as claimed in any one of the preceding claims 1 through 3 as used in a multi-path optical signal recording system with the aid of a slit aperture camera (3).

**Patentansprüche**

1. Schnelles Lesesystem für einen matrixförmigen optischen Ladungstransport-Meßwertaufnehmer (8A), der für eine Einzelbildübertragung strukturiert ist, um kurze Videobilder zu erfassen, dadurch gekennzeichnet, daß im matrixförmigen optischen Meßwertaufnehmer (8A) die Videoinformation auf eine Mehrzahl von parallelen Bändern (B1, B2,...) verteilt ist, die jeweils eine Mehrzahl von Bildpunktzeilen umfassen, wobei der restliche Teil der Erfassungsmatrix zwischen den Bändern (B1, B2,...) Trennintervalle (I1, I2,...) bildet und keine verwendbare Videoinformation enthält, wobei jedes Intervall (I1, I2,...) zwischen zwei aufeinanderfolgenden Bändern eine Mehrzahl von Bildpunktzeilen umfaßt, wobei die Bänder (B1, B2,...) parallel zu einem Leseregister (RL) angeordnet sind, dem eine Videoausgangsschaltung folgt, wobei der Lesevorgang von einem Zusatzsignalgenerator gesteuert wird, und daß die Lesemittel dazu vorgesehen sind, abwechselnd für jedes nutzbare Informationsband (B1, B2,...) und für jedes Intervall (I1, I2,...)
   - den parallelen Transport und die Akkumulierung der Ladungen der das betrachtete Band oder Intervall aufbauenden Zeilen im Register (RL); und
   - das serielle Lesen des im Register (RL) akkumulierten Inhaltes und das Zurücksetzen des Registers (RL) auf Null am Ende des vollständigen Transports des Bandes oder des Intervalls auszuführen.

2. System gemäß Anspruch 1, dadurch gekennzeichnet, daß die Lesemittel so beschaffen sind, daß das Lesen des Ladungstransport-Meßwertaufnehmers (8A) gemäß den folgenden Schritten ausgeführt wird:
   - einer ersten Periode (T2) des aufeinanderfolgenden parallelen Transports und der Akkumulation von Zeilen (1 bis 24) ohne nutzbare Information, die das erste Intervall (I1) bilden, im Leseregister (RL) und die Akkumulation von vorhandenen Rauschsignalen Bildpunkt für Bildpunkt,
   - einer zweiten Periode (T3) des seriellen Lesens des Registers (RL) und des Beseitigens der erfaßten Rauschsignale am Ende des Transports des ersten Intervalls (I1) im Register (RL),
   - einer dritten Periode (T4) des aufeinanderfolgenden parallelen Transports von das erste Band (B1) bildenden nutzbaren Zeilen (25 bis 27) an das Leseregister (RL) und des Summierens der vorhandenen nutzbaren Videosignale Bildpunkt für Bildpunkt,
   - einer vierten Periode (T5) des seriellen Lesens des Registers (RL) und der Gewinnung der auf das erste Band bezogenen, summierten Videosignale (SV) in analoger Form,

- und so weiter für die anderen nicht nutzbaren Intervalle und die anderen nutzbaren Bänder, die den Rest des zu analysierenden Bildes darstellen.

3. System gemäß Anspruch 1 oder 2, dadurch gekennzeichnet, daß die Videoausgabe (SV) nach einer Verstärkung (20) in einen Analog-/Digital-Umsetzer (21) mit einer das Halten der analogen Videosignale während der für die Umsetzung erforderlichen Zeit erlaubenden Abtast- /Halteeinrichtung eingegeben wird.

4. System gemäß Anspruch 3, dadurch gekennzeichnet, daß der Umsetzer (21) einen Speicher mit FIFO-Register (22) auf parallele Weise versorgt, wobei dem Speicher (22) eine Sendeschaltung (23) folgt, die im Hinblick auf eine Übertragung die Überführung der vom Speicher (22) ausgegebenen digitalen Informationen in serielle Informationen ausführt, und daß der Steuersignalgenerator eine programmierbare Ablaufsteuerung (25) ist, die die Steuersignale des Meßwertaufnehmers (8A), des Umsetzers (21), des Speichers (22) und des Senders (23) bearbeitet.

5. System gemäß Anspruch 3, dadurch gekennzeichnet, daß der Umsetzer (21) über eine Schnittstellenschaltung (27) eine digitale Speichereinrichtung (28) parallel versorgt und daß der Steuersignalgenerator eine programmierbare Ablaufsteuerung (25) ist, die die Steuersignale des Meßwertaufnehmers (8A) und des Umsetzers (21) bearbeitet.

6. System gemäß Anspruch 5, dadurch gekennzeichnet, daß die programmierbare Ablaufsteuerung (25) die Wahl der Anzahl der Meßwege, der Anzahl der von jedem Weg belegten Zeilen des Meßwertaufnehmers (8A), ihrer Position auf dem Meßwertaufnehmer, des Integrationsfaktors entlang einer Zeile, der Belichtungszeitdauer des Meßwertaufnehmers, des Lesetaktes dieses Meßwertaufnehmers sowie des Ausgabetaktes des Verzögerungs-FIFO-Speichers (22) gestattet, wobei die programmierbare Ablaufsteuerung im wesentlichen von einem Steuerelement auf Basis eines Mikroprozessors und eines Sequentiellspeichers gebildet wird, das mit gegebenenfalls mikroprogrammierbaren Logikschaltungen verbunden ist.

7. System gemäß Anspruch 1 oder 2, dadurch gekennzeichnet, daß die Videoausgabe (SV) nach einer Verstärkung (20) direkt in eine analoge Speichereinrichtung (26) eingegeben wird und daß der Steuersignalgenerator eine programmierbare Ablaufsteuerung (25) ist, die die Steuersignale des Meßwertaufnehmers (8A) und der Speichereinrichtung (26) bearbeitet.

8. System gemäß einem der Ansprüche 1 bis 3, das in einem System zum Speichern von optischen Signalen auf einer Mehrzahl von Wegen mit Hilfe einer Spaltblendenkamera (3) verwendet wird.

# FIG_1

# FIG_2

AXE SPATIAL (CHARGES)    X

AXE TEMPOREL (BALAYAGE)   Y

**FIG_3-C**

CH

LN

t

TRACE D'UNE VOIE DE MESURE

LIGNE N-2

LIGNE N

LIGNE N+2

LIGNE N-1

LIGNE N+1

POINT ELEMENTAIRE

X

**FIG_3-A**

X1

Y

CH

**FIG_3-B**

X

Vss

ZI

φ1P
φ2P
φ3P
φ4P

**FIG_5**

E₁

φR

VDR

D₁

VDD

SV

E₂

RL

VG3  φ1L φ2L φ3L φ4L

# FIG_4

FIG_6

## FIG_7

## FIG_8